# EUROPÄISCHE PATENTANMELDUNG

(11) **EP 2 615 222 A2**
(43) Veröffentlichungstag der Anmeldung: **17.07.2013**
(21) Anmeldenummer: 12166386.8
(22) Anmeldetag: 02.05.2012
(51) Int. Cl.: E04F 15/20, B32B 5/18, B32B 27/08

(54) **Unterlage für einen Laminat- oder Parkettboden**

(30) Priorität: 13.01.2012 DE 102012100296
(71) Anmelder: Sekisui Alveo AG, 6003 Luzern (CH)
(72) Erfinder: Brumm, Engelbert, 55618 Simmertal (DE); Eberl, Joachim, Dr., 6005 Luzern (CH); Graf, Paul, 67549 Worms (DE); Kropp, Dirk, Dr., 55411 Bingen (DE); Römer, Markus, 55566 Meddersheim (DE); Scholbe, Ulrich, 6005 Luzern (CH)
(74) Vertreter: Albiger, Jonas

(57) **Zusammenfassung**

Die Erfindung betrifft Unterlage (1) für einen Laminat- oder Parketboden (7), umfassend eine Schwerschicht und eine Federschicht. Erfindungsgemäß ist vorgesehen, dass die Schwerschicht und die Federschicht jeweils äußere Schichten der Unterlage (1) ausbilden, und eine äquivalente Luftschichtdicke der Unterlage (1) mehr als 150 m beträgt.

## Beschreibung

Die Erfindung betrifft eine Unterlage für einen Laminat- oder Parkettboden.

Mehrschichtige Bodenunterlagen, die mindestens eine elastische Federschicht, z. B. aus Schaumstoff, enthalten, werden im Baubereich unter anderem als Wärme-/Kältedämmung, Dampfsperre und zur Tritt- und Gehschalldämmung eingesetzt.

Eine solche Unterlage ist beispielsweise aus der DE 20 2006 003 676 U1 bekannt. Sie besteht aus einer Schwerschicht, einer darunter angeordneten Federschicht und einer metallisierten Folie. Die Federschicht stellt somit die mittlere Schicht in einem dreischichtigen Verbund dar. Die Schichten der Unterlage übernehmen dabei unterschiedliche Funktionen bzw. Aufgaben.

Durch die Schwerschicht, meist eine mit mineralischen Füllstoffen hochgefüllte Polyolefin-, Polyvinylchlorid- oder Elastomerfolie, wird die Gesamtmasse aus Unterlage und dem darüber angeordneten Laminat- oder Parkettboden erhöht. Diese Gewichtserhöhung in Kombination mit der erhöhten inneren Dämpfung (Verlustfaktor) durch die Füllstoffe führt zu einem veränderten Schwingungs- und Dämpfungsverhalten des Laminates selbst und trägt zu einer Reduzierung des in den Raum abgestrahlten Gehschalls bei. Durch die Schwerfolie erzielt man zudem einen subjektiv empfunden angenehmeren Klang im begangenen Raum, was durch Jury-Beurteilung bei praktischen Begehungen des entsprechend ausgestatteten Bodens mit z.B. Stöckelschuhen bewiesen wurde (siehe z.B. ACTA ACUSTICA Vol. 96 (2010) 4.94 - 504).

Ein Nachteil ist das hohe Gewicht der Folien, das bei handelsüblichen Rollengrößen von 20 m² zwischen 30 und 50 kg pro Rolle liegt. Falsche Handhabung bei Transport und Verlegung kann über einen längeren Zeitraum zu gesundheitlichen Beeinträchtigungen bei den Endanwendern führen. Umgekehrt führt eine Beschränkung des Rollengwichts auf zulässige Werte von 25 kg (siehe z.B. SUVA Leitfaden für die Gefährdungsbeurteilung in Klein- und Mittelbetrieben ,Manuelle Lastenhandhabung' Kap. 2.3.1 ,Planung von Transportvorgängen') zu handelsunüblichen Konfektionsgrößen der Rollen von weniger als 10 m². Diese kleinere Packungsgröße führt beim Endanwender zu einem erheblichen Verlege-Mehraufwand.

Ein weiterer Nachteil ist in der verwendeten Schwerfolie zu sehen. Diese hochgefüllten Polyolefin- oder Polyvinylchloridfolien zeigen gemessenen VOC-Werte, die sehr nahe an den Grenzwerten liegen, die beispielsweise im AgBB-Bewertungsschema für VOC aus Bauprodukten (gültig in Deutschland, Stand: 2010; AgBB = Ausschuss zur gesundheitlichen Bewertung von Bauprodukten) und in den AFFSET-Richtlinien (gültig in Frankreich, Stand: 2009; AFFSET = L'Agence française de sécurité de l'environnement et du travail) festgelegt sind.

Die unter der Schwerschicht angeordnete Federschicht stellt eine weiche elastische Unterlage für die Schwerschicht dar und reduziert die Lautstärke von Tritt- und Gehschall durch ihre schallabsorbierenden Eigenschaften, vor allem im unteren und mittleren Frequenzspektrum. Der vom Laminat nach unten abgestrahlte Körperschall wird von der Schwerschicht gedämpft und zusätzlich von der darunterliegenden elastischen Schicht abgefedert. Durch die Federung wird die Körperschallübertragung auf die tragende Decke und als Folge die sekundäre Abstrahlung als Luftschall an den darunterliegenden Raum reduziert. Eine weitere Funktion der Federschicht als Teil des Systems ist die Aufnahme von punktuellen Unebenheiten des Unterbodens, wie sie häufig an der Verlegestelle in Form von kleinen Kieselsteinen, Schmutz usw. vorkommen.

Ein weiterer Bestandteil des Systems bildet eine üblicherweise aufkaschierte Folie, beispielsweise eine Kunststofffolie, auf die einseitig eine Metallschicht aufgetragen ist. Diese dient als diffusionshemmende Schicht (Definition nach DIN 4108-3). Die Folie behindert oder reduziert die Wasserdampfdiffusion durch die Unterlage soweit, dass entsprechende Anforderungen hinsichtlich der Wasserdampfdiffusion erfüllt sind.

Ein Nachteil dieser diffusionshemmenden Folienschicht ist in ihrer Stoß- und Kratzempfindlichkeit zu sehen. Selbst nur leichtes Stoßen oder Kratzen über die Folie durch den Endanwender, das bei der Verlegung vor Ort nur schwer verhindert werden kann, bewirken eine Beschädigung der aufgetragenen Folienschicht, wodurch die diffusionshemmende Wirkung stark reduziert wird.

Das beschriebene Unterlagsmaterial ist insgesamt ein inhomogenes System, d.h. es besteht aus unterschiedlichen Materialien, die meist durch Multilamination zusammengefügt werden. Die Inhomogenität der Materialien erfordert ein erhöhtes Maß an Aufwand bei der Produktion des Endprodukts, was, abhängig von den verwendeten Materialen, auch zu höheren Kosten führen kann.

In DE 44 11 453 A1 ist eine Dämmbelaganordnung für die Verwendung im Boden- und Wandbereich zur Verbesserung der Raumakustik beschrieben. Die Anordnung kann aus einem Feder-Masse-Feder-System bestehen, wobei die Schwerschicht mineralische Füllstoffe (BaSO₄ und/oder CaCO₃ enthält, die in Thermoplaste oder Elastomere eingebettet sind. Die Federschicht kann hier Filz, Vlies, Schaumstoff, Kork und/oder Krepp-Pappe aufweisen. Anwendungsbereich dieser Dämmbelaganordnung sind unter anderem Laminatböden und Fertigparkett. Die Schwerschicht soll hier zu einer Absorption von hochfrequenten Biegewellen des Bodenbelags führen und dadurch die Abstrahlfrequenz zu tiefen Frequenzen verschieben.

Nachteil dieses Systems ist, dass keine diffusionshemmende Schicht verwendet wird, wodurch dieses System als Unterlage für Laminat- und Parkettböden nur unzureichend geeignet ist, da längerfristiger Feuchtigkeitseinwirkung von unten bekanntermaßen zur Beschädigung des Laminat- bzw. Parkettbodens oder zur Schimmelbildung führt.

EP 1 801 312 A1 beschreibt ein akustisch-dämpfendes und wärmedämmendes Mehrschichtsystem, das ebenfalls als Wärmedämmschicht für Parkett- und Laminatböden verwendet werden kann. Das Mehrschichtsystem besteht aus einer Wasserdampfsperrschicht einer Fliesschicht und einer Schaumstoffschicht z. B. Polyethylenschaumstoff.

Der Nachteil dieses Systems ist darin zu sehen, dass keine Schwerschicht vorhanden ist, die deutlich zur Verbesserung des Klangbilds des Bodens, hinsichtlich Tritt- und Gehschallverhalten, beiträgt.

CH 686 371 beschreibt eine Kunststoffbahn, bestehend aus einem Verbund aus Vlies und einem porenfreien Thermoplasten, der die Wasserdampfdiffusion verhindert oder zumindest wesentlich reduziert.

Nachteil bei der Verwendung dieses Systems ist hier ebenfalls in einem ungenügenden Tritt- und Gehschallempfinden zu sehen, da keine Schwerfolie eingebettet ist.

EP 1 219 760 B1 beschreibt ein Schallschutz-Verbundsystem für Raumbegrenzungsflächen. Das System besteht aus einer hochdichten Faserplatte, einer Dämpfungsschicht und einer Schalldämmschicht. Die Dämpfungsschicht ist dabei eine Schwerfolie, die aus einem HDPE/EVA-Gemisch mit mineralischen Füllstoffen und Weichmachern besteht. Als Schalldämmschicht wird ein Verbundschaumstoff aus recycelten Polyurethanflocken oder Luftnoppenfolie verwendet.

Nachteil dieses Verbundsystems ist, dass es durch die verwendeten Schwerfolie ein hohes Gewicht aufweist. Dies kann zu den bereits oben erwähnten gesundheitlichen Schäden bzw. durch die Verwendung von kleineren Packungsgrößen zu einem Verlege-Mehraufwand beim Endanwender führen.

Der Erfindung liegt die Aufgabe zugrunde, eine Unterlage für einen Laminat- oder Parkettboden bereitzustellen, bei der die oben beschriebenen Nachteile möglichst vermieden werden.

Die der Erfindung zugrunde liegende Aufgabe wird mit der Merkmalskombination gemäß Anspruch 1 gelöst. Bevorzugte Ausführungsbeispiele können den Unteransprüchen entnommen werden.

Der Gegenstand gemäß Anspruch 1 ist eine Unterlage für einen Laminat- oder Parkettboden, die eine Schwerschicht und eine Federschicht umfasst. Die Unterlage zeichnet sich dadurch aus, dass die Schwerschicht und die Federschicht jeweils äußere Schichten der Unterlage ausbilden und dass eine äquivalente Luftschichtdicke der Unterlage mehr als 150 m beträgt. Bei der äquivalenten Luftschichtdicke handelt es sich um den sogenannten s_{d}-Wert. Die Luftschichtdicke s_{d} ist ein Maß für den Widerstand, den eine Bauteilschicht der Wasserdampfdiffusion entgegensetzt. Sie beschreibt den Diffusionswiderstand anschaulich, indem sie die Dicke angibt, welche eine ruhende Luftschicht haben muss, damit sie im stationären Zustand und unter denselben Randbedingungen von demselben Diffusionsstrom durchflossen wird, wie die betrachtete Bauteilschicht bzw. die betrachtete Unterlage. Gemäß DIN 4108-3 sind Schichten mit s_{d}-Werten kleiner als 0,5 m diffusionsoffenen, mit Werten zwischen 0,5 m und 1500 m diffusionshemmend und mit s_{d}-Werten grösser als 1500 m diffusionsdicht. Für die erfindungsgemäße Anwendung sind im Allgemeinen s_{d}-Werte grösser als 150 m notwendig, um eine ausreichend diffusionshemmende Wirkung zu gewährleisten.

Die beschriebene Unterlage ist ein leichtes und zweischichtiges Produkt, welches im Wesentlichen nur die leichte Schwerschicht und die Federschicht umfasst, die thermisch miteinander verbunden werden. Die Verbindung kann auch mit Hilfe eines Haftvermittlers erzeugt werden, der jedoch nicht als eigenständige Schicht im Sinne der Erfindung aufgefasst werden kann. Mit dem vereinfachten Aufbau, bestehend aus Schwerschicht und Federschicht grenzt sich somit die erfindungsgemäße Unterlage von einem schweren Dreischicht-Aufbau ab, wie er beispielsweise in der DE 20 2006 003 676 U1 oder EP 1 219 760 B1 beschrieben ist

Aufgrund des vereinfachten Aufbaus aus nur zwei Schichten, ist die Herstellung der Unterlage gegenüber den bekannten Systemen mit weniger Prozessschritten durchführbar und somit kostengünstiger. Trotz der preiswerteren Herstellung treten dabei im Vergleich zu den bestehenden Systemen keine verminderten Materialeigenschaften wie schlechteres Geh- /Tritt- und Raumschallverhalten auf.

Es hat sich überraschend gezeigt, dass eine erfindungsgemäße Kombination von Schwerschicht und Federschicht bereits zu äquivalenten Luftschichtdicken von mehr als 150 m führen, ohne dass es einer zusätzlichen Folie oder Schicht als Dampfsperrfolie/schicht bedarf. Somit kann ein Zweischicht-Produkt, bestehend aus Schwerschicht und Federschicht, als Unterlage für Laminat- und Parkettboden eingesetzt werden, die nicht nur den Raumschall und den Trittschall ausreichend reduziert bzw. günstig beeinflusst, sondern auch hinsichtlich Wasserdampfdiffusion hervorragende Ergebnisse erzielt (s_{d}-Wert über 150 m). Zudem ist die Stoß- und Kratzempfindlichkeit der Schwerschicht gegenüber diffusionshemmenden Folien deutlich verringert, wodurch die Sicherheit und Effektivität der diffusionshemmenden Schicht auch nach der Verlegung durch den Endanwender gewährleistet ist.

In einem bevorzugten Ausführungsbeispiel umfasst die Schwerschicht eine Schwerfolie aus Polyolefin, Polyvinylchlorid oder einem thermoplastischen Elastomer, wobei eine Dichte der Schwerfolie 1000 kg/m³ bis 1600 kg/m³ beträgt. Die Schwerschicht kann dabei ausschließlich aus Polyolefin bestehen. Besonders bevorzugte Werte für die Dichte der Schwerfolie liegen in einem Bereich zwischen 1100 und 1400 kg/m³.

Trotz der verwendete leichten Schwerschicht zeigt das erfindungsgemäße Unterlagssystem keinen "(Memory-Effekt". Das Unterlagssystems wird üblicherweise in Rollenform in den Handel gebracht. Gerollte Bahnen aus Polyolefinschaumstoff möchten nach dem ausrollen wieder ihre ursprüngliche Form (Rollenform) einnehmen. Durch geschickte Wahl der bevorzugten Dichte, wird der Memory-Effekt verhindert und die Installation beim Endanwender enorm erleichtert.

Die erfindungsgemäße Unterlage ermöglicht ein Gesamtgewicht im Bereich von ca. 5 kg pro Rolle (10 m²), wodurch sie sehr viel leichter als gleichartige Unterlagsrollen ist, die derzeit im Handel erhältlich sind und ein Gewicht von ca. 20 kg pro Rolle (10 m²) aufweisen. Somit ist die Gefahr einer möglichen gesundheitlichen Beeinträchtigung der Endanwender durch falsche Handhabung (Heben) vermindert.

Die im bevorzugten Ausführungsbeispiel verwendete Schwerfolie weist geringere TVOC-Werte (3 Tage, nach AgBB) im Bereich von 150 µg/m³ gegenüber einer schweren hochgefüllten Polyolefinfolie auf, die im Bereich von 1500 µg/m³ liegen. Beide Werte sind unterhalb der derzeit gesetzlich erlaubten Grenzwerte von 10'000 mg/m³. Die diesem Ausführungsbeispiel zugrunde liegende Folie verringert somit zusätzlich noch das Risiko der gesundheitlichen Beeinträchtigung der Endanwender durch leichtflüchtige gesundheitsschädliche Stoffe um den Faktor 10.

Die Oberfläche der Schwerfolie kann zudem, kostengünstig durch geeignete Modifikationen der verwendeten Polyolefine-Harze mit unterschiedlichen funktionellen Eigenschaften versehen werden. Dies können Antirutsch-, Gleit- oder Klebeeigenschaften sein.

Eine Dicke der Schwerschicht kann 0,1 bis 1,5 mm betragen. In einem bevorzugten Ausführungsbeispiel beträgt die Dicke der Schwerschicht 0,1 bis 0,5 mm. Die Schwerschicht kann mineralische Füllstoffe, wie Quarzsand oder Keramikpartikel, umfassen, um eine gewünschte Dichte einzustellen. Beispielsweise kann eine Polyolefin-Schwerfolie einen Anteil von 30 bis 45 % eines mineralischen Füllstoffes aufweisen.

Die Federschicht umfasst vorzugsweise eine Polyolefin-Schaumstoffschicht, z. B. in Ausführung einer Polyethylen-Schaumstoffschicht oder einer Polypropylen-Schaumstoffschicht. Alternativ kann die Federschicht auch eine Polystyrol-Schaumstoffschicht umfassen. Bevorzugte Dichten für die Schaumstoffschichten liegen zwischen 15 und 400 kg/m³ oder gar in einem engeren Bereich zwischen 40 und 140 kg/m³. Alternativ oder zusätzlich kann die Federschicht auch Vlies-Filz und/oder andere elastische Materialien umfassen. Auch kann die Federschicht ausschließlich aus der Polyolefin-Schaumstoffschicht bestehen.

Eine Dicke der Federschicht bzw. der Polyolefin-Schaumstoffschicht oder Polystyrol-Schaumstoffschicht kann zwischen 0,5 bis 5 mm liegen und beträgt vorzugsweise 1 bis 3 mm. Bezogen auf die Dicke der Schwerschicht kann die Dicke der Federschicht 5 bis 10 mal größer sein. In einem bevorzugten Ausführungsbeispiel ist die Dicke der Federschicht 7 bis 8 mal größer als die Dicke der Schwerschicht.

Der für die Schaumstoffschichten eingesetzte Schaumstoff kann vernetzt oder unvernetzt sein.

In einem bevorzugten Ausführungsbeispiel weist an zumindest einer Längsseite der Unterlage die Schwerschicht gegenüber der Federschicht einen Überstand auf. Dieser Überstand kann 2 bis 30 cm, vorzugsweise 2 bis 10 cm breit sein. Durch diesen Überstand der Schwerschicht können zwei parallel nebeneinander liegende Bahnen der Unterlage überlappend verlegt werden. Bei einem Ausführungsbeispiel, bei dem die Unterlage lediglich an einer Längsseite einen Überstand der Schwerschicht aufweist, lassen sich zwei benachbarte Bahnen überlappend aneinander legen, indem der Überstand einer Bahn auf die Längsseite der anderen Bahn ohne Überstand gelegt wird. Dadurch lässt sich eine flächige Dampfsperre ohne Lücken oder Spalte aufbauen, ohne dass es im Überlappungsbereich - bedingt durch die eher geringe Dicke der Schwerschicht im Vergleich zu der Federschicht - zu einer merklichen dicken Erhöhung der Unterlage kommt.

Der Überstand kann an einer der Federschicht zugewandten Seite einen Klebefilm mit Abdeckstreifen aufweisen. Bei abgezogenem Abdeckstreifen dient der Klebefilm dazu, den Überstands einer Bahn mit einer benachbarten Bahn zu verbinden. Der Überstand kann zudem auch andere geeignete Mittel zum Verbinden zweier benachbarter Unterlagenbahnen umfassen. Alternativ oder zusätzlich kann ein Klebefilm mit Abdeckstreifen auch an einer der Federschicht abgewandten Seite der Schwerschicht angeordnet sein, wobei dieser Klebefilm sich dann an einer anderen Längsseite der Unterlage befindet, an der kein Überstand der Schwerschicht vorgesehen ist.

Der Klebefilm kann eine Breite von 3 bis 40 mm, vorzugsweise 5 bis 25 mm aufweisen. Durch derartige Breiten und geeignete Klebematerialien lassen sich ausreichend feste Verbindungen zwischen benachbarten Unterlagen herstellen.

Anhand der in den Figuren dargestellten Ausführungsbeispiele wird die Erfindung näher erläutert. Es zeigen
- Figur 1: Eine erfindungsgemäße Unterlage im Querschnitt; und
- Figur 2: eine erfindungsgemäße Unterlage im Querschnitt in einer weiteren Ausführung.

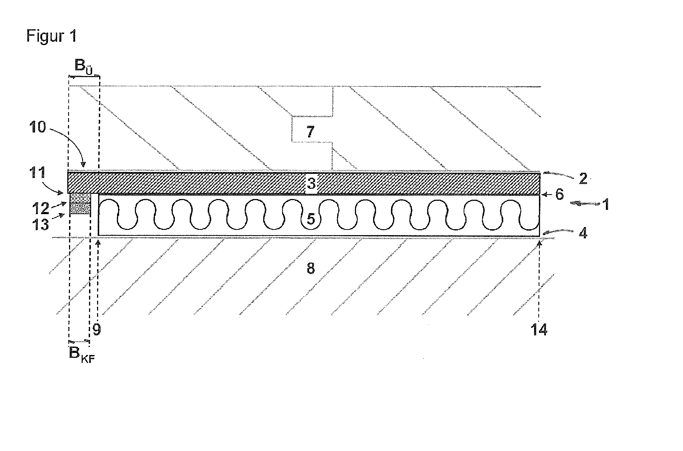

Figur 1 zeigt eine in ihrer Gesamtheit mit 1 bezeichnete Unterlage, die an einer Oberseite 2 eine Schwerfolie 3 aufweist. An einer Unterseite 4 ist eine mit 5 bezeichnete Polyethylen-Schaumstoff (PE-Schaumstoffschicht) angeordnet. Die Schwerfolie 3 und die PE-Schaumstoffschicht 5 bilden jeweils äußere Schichten der Unterlage aus. Schwerfolie 3 und PE-Schaumstoffschicht 5 liegen an einer gemeinsamen Trennlinie 6 aneinander an. An dieser Trennlinie wurden die Schwerfolie 3 und der PE-Schaumstoff 5 thermisch verbunden. Für eine gute Haftung zwischen der Schwerfolie 3 und der PE-Schaumstoffschicht 5 kann ein Haftvermittler oder Kleber vorgesehen sein. Dieser Haftvermittler oder Kleber soll jedoch keine Schicht im Sinne der Erfindung darstellen.

Die Schwerfolie 3 liegt im verlegten Zustand an einem hier nicht weiter dargestellten Laminat- oder Parkettboden 7 an, während die PE-Schaumstoffschicht 5 auf einem ebenfalls nicht weiter dargestellten Unterboden 8 beispielsweise in Form eines Estriches aufliegt. Genau genommen stellt Figur 1 eine Bahn der erfindungsgemäßen Unterlage 1 dar, wobei im verlegten Zustand nebeneinander liegende Bahnen sich zu einer großflächigen Gesamtunterlage des Laminat- oder Parkettbodens 7 ergänzen.

Die Schwerfolie 3 ist vorzugsweise aus Polyolefin und weist eine Dichte von 1100 bis 1300 kg/m² auf. Die Dicke der Schwerfolie beträgt im in Figur 1 dargestellten Ausführungsbeispiel 0,2 bis 0,3 mm. Die Dicke der PE-Schaumstoffschicht soll im dargestellten Ausführungsbeispiel 2 mm betragen.

Die Breite der in Figur 1 dargestellten Unterlage bzw. einer Bahn der erfindungsgemäßen Unterlage 1 soll 80 bis 150 cm betragen. Ersichtlich ist, dass die dargestellten Breiten, wie im Übrigen auch die dargestellten Dicken der einzelnen Schichten 3, 5 der Unterlagen 1 in Figur 1 nicht maßstabsgetreu dargestellt sind. Das Gleiche gilt sinngemäß für Figur 2.

An einer Längsseite 9 der Unterlage 1 weist die Schwerfolie 3 einen Überstand 10 auf. Eine Breite des Überstands 10 ist mit B_{Ü} bezeichnet und kann Werte zwischen 2 bis 30 cm annehmen. An einer der PE-Schaumstoffschicht zugewandten Seite 11 des Überstands 10 ist ein Klebefilm 12 mit einem Abdeckstreifen 13 vorgesehen. Eine Breite des Klebefilms und des gleich breiten Abdeckstreifens ist mit B_{KF} bezeichnet.

Mittels des Klebefilms 12, vorausgesetzt, dass zuvor der Abdeckstreifen 13 abgezogen ist, lassen sich zwei längsseitig aneinander gelegte Bahnen der Unterlage 1 miteinander verbinden. Dabei wird an eine hier nicht dargestellten und bereits verlegten Nachbarbahn, die wie die dargestellte Bahn an einer Längsseite 14 über keinen Überstand der Schwerfolie 3 verfügt, der Überstand 10 der dargestellten Unterlage 1 in überlappender Weise angelegt. Die PE-Schaumstoffschicht der Nachbarbahn liegt dann stoßbündig an der PE-Schaumstoffschicht der in Figur 1 dargestellten Bahn der Unterlage 1 an. Somit kommt es an der Verbindungsstelle zweier benachbarter Bahnen zu einer fixierten Überlappung der Schwerfolie 3 und zu einer fixierten Stoßverbindung der nebeneinander liegenden PE-Schaumstoffschichten 6.

Figur 2 zeigt ein weiteres Ausführungsbeispiel der Erfindung. Schichten, Bauteile oder Merkmale in Figur 2, die zu denen in Figur 1 identisch oder ähnlich sind, werden mit gleichen Bezugszeichen versehen. Das Ausführungsbeispiel der Figur 2 unterscheidet sich von dem Ausführungsbeispiel der Figur 2 dadurch, dass der Klebefilm 12 mit dem Abdeckstreifen 13 nicht an der Unterseite 11 des Überstands 10 angeordnet ist, sondern an der Oberseite 2 der Schwerfolie 3 im Bereich der Längsseite 14. Wie bereits oben beschrieben, lassen sich benachbarte Bahnen der Unterlage 1 in überlappender Weise durch den Klebefilm fixiert miteinander verbinden. Zudem ist es auch denkbar, die Ausführungsbeispiel der Figuren 1 und 2 derart zu kombinieren, dass sowohl an der Unterseite 11 des Überstands 10 als auch an der Oberseite 2 der Schwerfolie 3 im Bereich der Längsseite 14 jeweils ein Klebefilm mit Abdeckstreifen vorgesehen ist.

### Bezugszeichenliste

- 1: Unterlage
- 2: Oberseite
- 3: Schwerfolie
- 4: Unterseite
- 5: PE-Schaumstoffschicht
- 6: Trennlinie
- 7: Laminat- oder Parkettboden
- 8: Unterboden
- 9: Längsseite
- 10: Überstand
- 11: Unterseite
- 12: Klebefilm
- 13: Abdeckstreifen
- 14: Längsseite

## Patentansprüche

1. Unterlage (1) für einen Laminat- oder Parkettboden (7), umfassend eine Schwerschicht und eine Federschicht, **dadurch gekennzeichnet, dass** die Schwerschicht und die Federschicht jeweils äußere Schichten der Unterlage (1) ausbilden, und eine äquivalente Luftschichtdicke der Unterlage (1) mehr als 150 m beträgt.

2. Unterlage (1) nach Anspruch 1, **dadurch gekennzeichnet, dass** die Schwerschicht eine Schwerfolie (3) aus Polyolefin (PO) oder einem thermoplastischen Elastomer umfasst, wobei eine Dichte der Schwerfolie (3) 1000 kg/m3 bis 1600 kg/m3 beträgt.

3. Unterlage (1) nach Anspruch 1 oder 2, **dadurch gekennzeichnet, dass** eine Dicke der Schwerschicht 0,1 mm bis 1,5 mm beträgt.

4. Unterlage (1) nach einem der Ansprüche 1 bis 3, **dadurch gekennzeichnet** die Federschicht eine Polyolefin (PO)-Schaumstoffschicht (5) oder eine Polystyrol-Schaumstoffschicht umfasst.

5. Unterlage (1) nach einem der Ansprüche 1 bis 4, **dadurch gekennzeichnet, dass** die Polyolefin-Schaumstoffschicht (5) eine Dichte von 15 bis 400 kg/m³ aufweist.

6. Unterlage (1) nach einem der Ansprüche 1 bis 5, **dadurch gekennzeichnet, dass** eine Dicke der Federschicht 0,5 bis 5 mm beträgt.

7. Unterlage (1) nach einem der Ansprüche 1 bis 6, **dadurch gekennzeichnet, dass** an zumindest einer Längsseite (9) der Unterlage (1) die Schwerschicht gegenüber der Federschicht einen Überstand (10) aufweist.

8. Unterlage (1) nach Anspruch 7, **dadurch gekennzeichnet, dass** der Überstand (10) eine Breite von 2 bis 30 cm aufweist.

9. Unterlage (1) nach Anspruch 7 oder 8, **dadurch gekennzeichnet, dass** der Überstand (10) an einer der Federschicht zugewandten Seite (11) einen Klebefilm (12) mit Abdeckstreifen (13) aufweist.

10. Unterlage (1) nach Anspruch 9, **dadurch gekennzeichnet, dass** der Klebefilm (12) eine Breite von 3 bis 40 mm aufweist.
